# EUROPEAN PATENT SPECIFICATION

(11) **EP 0 616 741 B1**
(45) Date of publication and mention of the grant of the patent: **08.11.1995**
(21) Application number: 92924739.3
(22) Date of filing: 02.12.1992
(51) Int. Cl.: H04B 7/26, H04Q 7/00

(54) **CELLULAR RADIO SYSTEM**
ZELLULARES FUNKSYSTEM
SYSTEME RADIO CELLULAIRE

(30) Priority: 13.12.1991 FI 915886
(43) Date of publication of application: 28.09.1994
(73) Proprietor: NOKIA TELECOMMUNICATIONS OY, 02600 Espoo (FI)
(72) Inventor: SALMELA, Mikko, SF-02430 Masala (FI)
(74) Representative: Tomlinson, Kerry John
(86) International application number: FI9200328
(87) International publication number: WO9312587

(56) References cited:
- EP-A- 399 206
- EP-A- 416 872
- WO-A-92/12601
- WO-A-92/16061

## Description

### Field of the invention

The invention relates to a cellular radio system comprising a plurality of mobile radio stations roaming in the system, a plurality of base stations, each base station comprising at least one radio transmitter and radio receiver, an antenna means with a predetermined radio coverage area, and one or more allocated radio channels for establishing a radio connection with the mobile radio stations within the predetermined radio coverage area, at least the base stations with adjacent radio coverage areas having different allocated radio channels.

### Background of the invention

In cellular mcbile radio networks the geographical area covered by the network is divided into radio cells, each of which has at least one base station. A certain number of frequencies (radio channels) are allocated to each base station, and said channels may in turn be shared by a plurality of TDMA (Time Division Multiple Access) traffic channels. The size and distribution of cells and the number of radio channels available to them are typically determined by the traffic capacity demand in said area. However, a cellular mobile radio network may include cells or larger areas where the traffic capacity demand may rise temporarily, e.g. at particular times of the day, to a very high level. If the number of radio channels in a cell is set on the basis of said instaneous maximum capacity demand, the number of radio channels increases, and consequently the amount and cost of radio equipment in a base station also becomes higher. Further, this kind of solution does not result in effective utilization of radio frequencies in a network. On the other hand, if the number of radio channels and the equipment of the base station are not set on the basis of maximum traffic, the number of failed call attempts becomes very high in said area at peak hours.

### Summary of the invention

The object of the invention is to overcome this problem.

This is achieved by a cellular radio system according to the invention, the system comprising at least one base station including an antenna means that can be directed automatically or by remote control, depending on the time of the day or variation in regional traffic load.

The basic idea of the invention is that at least one base station may, by mechanically re-directing its antenna according to traffic demand, direct part or all of its capacity (radio and / or traffic channels) to the area of the radio cell where the traffic capacity demand has temporarily increased. An advantage of the invention is that the number of channels in a single radio cell need not be set on the basis of an instantaneous maximum capacity demand in said radio cell but it can be set on the basis of an average maximum capacity demand in a plurality of adjacent radio cells. If necessary, the traffic capacity of a single cell may be increased by directing part of the capacity of the neighboring cells thereto, whereby the capacity of the network may be effectively controlled regionally and a higher utilization of the equipment and frequency / traffic channels of the base stations may be accomplished. Also, more effective utilization of radio channels in the entire network is achieved with the invention.

This kind of base station with a directable antenna may also be a so-called extra base station which does not actually have a cell of its own and which is located at the peripheral area of a plurality of cells to selectively increase traffic capacity.

Advantageously, a base station comprises a drive means for re-directing the antenna by turning it mechanically. This may be performed automatically or manually, remote controlled by an operator, from the control center of the system.

EP-A- 0 416 872 relates to the routing of radiotelephone transmissions from a transmitter to a particular antenna in a cellular radiotelephone system.

### Brief description of the drawings

In the following the invention is described in greater detail by means of illustrating embodiments with reference to the attached drawings wherein
Fig. 1 shows a schematic view of a cellular mobile radio network in accordance with the present invention;
Fig. 2 shows a block diagram of a transmitter section and a receiver section of a base station according to the invention; and
Fig. 3 shows ways of controlling the direction of a base station antenna.

The invention may be applied to regional control of traffic capacity of a mobile radio network in any digital mobile telephone or mobile radio system, such as the European mobile telephone system GSM (Groupe Special Mobile), and in an analogue mobile telephone or radio system, such as the Nordic Mobile Telephone system NMT. With regard to the basic idea of the invention the analogue and digital systems are identical although in a typical analogue mobile radio system one frequency i.e. radio channel, provides one traffic channel, whereas in a typical digital mobile radio system the traffic capacity is higher since several, typically 8, traffic channels are time division multiplexed to each radio channel on a TDMA principle, i.e. on one radio channel may be up to 8 simultaneous connections between a base station and mobile radios. The basic configuration and operation of the GSM and NMT mobile phone systems are well known to those skilled in the art and defined fairly accurately by the specifications of each system.

A mobile radio network may comprise one or more MSC areas, i.e. areas where services are provided by one mobile switching center MSC (mobile exchange). The MSC area may in turn consist of one or more location areas, which are areas covered by a plurality of radio cells. A cell is the smallest geographical area of the system, comprising one or more fixed radio transceivers or base transceiver stations BTS and utilizing predetermined radio channels.

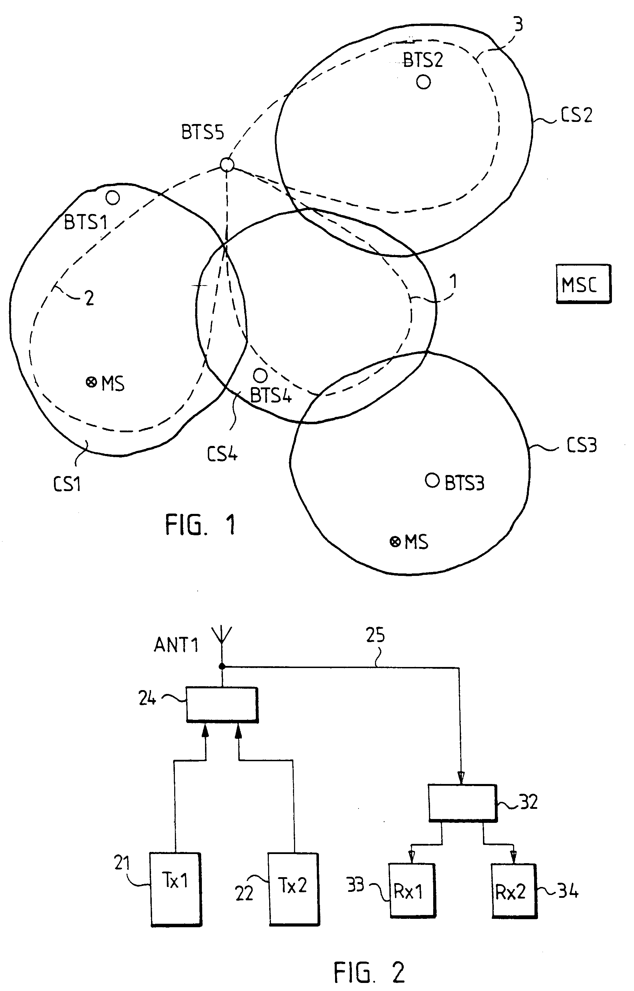

Fig. 1 shows an embodiment of an MSC area or a location area of a cellular mobile radio network where the present invention may be applied. The geographic area covered by the cellular mobile radio network is divided in an essentially continuous manner into smaller radio areas, i.e. into radio cells CS1, CS2, CS3 and CS4, such that adjacent radio areas limit one another or overlap in their peripheral areas. Accordingly, in each radio cell CS1 to CS4 is located at least one fixed radio station or base station BTS1 to BTS4 capable of establishing a connection on the radio channels allocated to it, i.e. pairs of transmitting and receiving frequencies (duplex interval e.g. 45 MHz), with the mobile radios MS currently located or roaming in its radio cells CS1 to CS4. It is typical that the radio channels allocated are different at least in adjacent radio cells. Each base station BTS has also signalling and traffic channel links with a mobile exchange MSC, which controls the operation of one or more base stations within its MSC area. For the sake of simplicity it is assumed in the embodiment of Fig. 1 that all base stations BTS1 to BTS4 have a common mobile exchange MSC.

Each base station BTS1 to BTS4 of the cellular mobile radio network typically comprises at least one radio transmitter and one receiver; in the embodiment of Fig. 2, there are two radio transmitters 21 and 22 and two radio receivers 33 and 34 connected to an antenna unit ANT1. The size and shape of the radio coverage (radiation pattern) of the antenna unit ANT1 determine the size and shape of the radio cell of the base station. The antenna unit ANT1 may comprise separate antennae for transmitting and for receiving.

In the transmitter section of the base station radio transmitters 21 and 22 are connected directly to a combiner 24 combining the radio frequency transmission signals of the radio transmitters 21 and 22 and feeding the combined signal to the antenna unit ANT1.

In the receiver section of the base station the antenna unit ANT1 is connected to radio receivers 33 and 34 via a distribution amplifier unit 32.

Normally the base station BTS has a fixed coverage area determined by the radiation patterns of one omnidirectional antenna or, alternatively, of one or more directional antennae. All the radio channels of the base station are within the coverage area of the main antenna unit ANT1, i.e. available to the mobile radios in the radio cell of the base station.

However, situations occur where e.g. the traffic in the radio cell CS4 may temporarily exceed the capacity of the base station BTS4 of the cell. For example, the area covered by the cell CS4 may include the end of a motorway which is the main entry to the city and where traffic jams between 7.00 and 8.30 am. Correspondingly, the area covered by another radio cell CS1 may include e.g. an industrial and office area where the most telephone traffic occurs between 8.30 and 16.00. The cell CS2 may cover an area including a sports stadium or a fair area and the capacity demand for telephone traffic is high when events are organized therein.

If the number of radio channels in the base stations BTS is determined in view of the peak hours, the utilization of the radio channels is low at the system level.

The system of the invention comprises at least one base station with an antenna / antennae directable, depending on the regional variation in traffic load, to the near-by areas currently requiring the most traffic capacity. In the embodiment of Fig. 1 the cells CS1, CS2 and CS4 have in their vicinity a base station BTS5 which has an antenna with a radiation pattern that can, if necessary, be directed to the directions 1, 2 and 3 to compensate and eliminate load peaks of telephone traffic in the cells at different times.

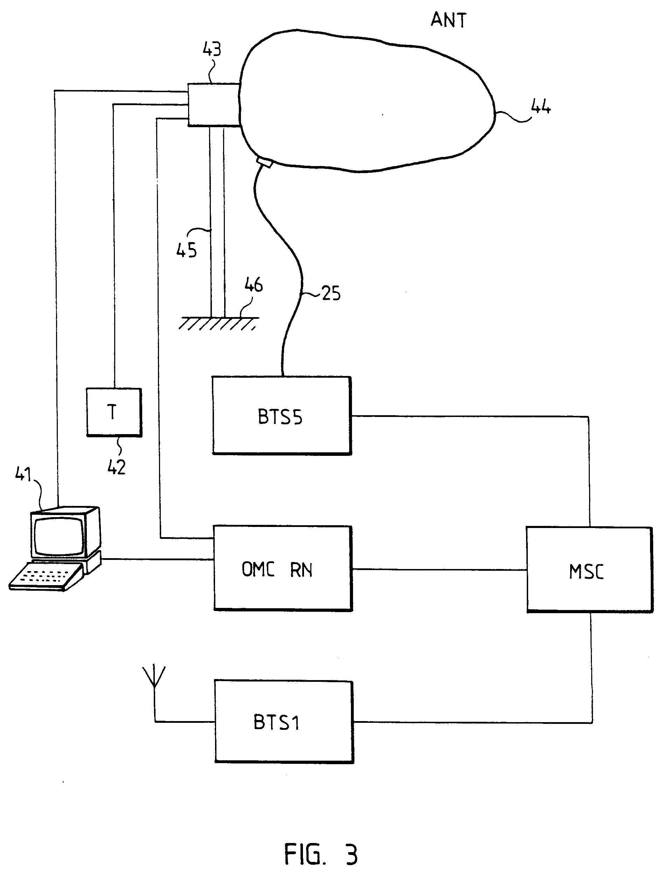

Fig. 3 illustrates a few possible ways to control the directing of the radiation pattern of the antenna in the base station BTS5. The base station BTS5 is identical to the base stations BTS1 to BTS4 in its basic structure but, in addition, it includes a mechanical drive means 43 connected to a frame 45 (mast) for re-directing the directional antenna unit 44 (usually includes different antennae for transmitting and receiving) by turning the antenna unit. The drive means is, for example, a step-by-step controllable electric motor 43, which may turn the antenna unit 41 at least in a horizontal plane, advantageously also in a vertical plane. Vertical directability is advantageous e.g. when the antenna unit is located at a high location since the antenna unit can then be directed to a near-by area at a lower level by inclining the antenna towards the area in a vertical plane. Also the length of the antenna lobe (radiation pattern) may be affected by turning the antenna in a vertical plane.

The antenna turning means 43 may be controlled in many ways, some of which are illustrated in Fig. 3. The directability of the antenna 44 in response to different times of the day and the corresponding control operations of the turning means 43 may be automatic and permanently programmed to a particular timer unit 42. Thereby the antenna of the base station BTS5 may be redirected automatically depending on the time of the day and / or the day of the week, e.g. such that from 7.00 to 8.30 am the antenna of the base station BTS5 assumes the direction 1 (motorway), from 8.30 to 16.00, the direction 2 (office and industrial area), and when events are arranged at the sports stadium, the direction 3.

Alternatively, the turning means 43 of the antenna 44 may be controlled by remote control from the control center 41 of the radio system either manually or by preprogramming depending on the time and the loading of the network.

Further, the radio system may comprise a separate capacity control unit OMCRN, which, depending on the time and / or the loading of the system, automatically directs channel capacity to the loaded areas by controlling e.g. the antenna turning unit 43 of the base station BTS5. The system may comprise one OMCRN unit for the entire system or several OMCRN units, each of which controls part of the system. An OMCRN unit also makes it possible to take into account the effect the directing of the antennae has on elsewhere in the radio network. An OMCRN unit or the corresponding operations may also be integrated to a mobile exchange MSC. For example, a mobile exchange MSC (or another element in the network) may, on detecting overloading of a base station BTS1, generate an alarm to a capacity control unit OMCRN, whereby the OMCRN instructs the turning means 43 of the base station to turn the antenna 44 to the direction 2.

The Figs. and the account thereof are intended only to illustrate the present invention. In its details the radio system according to the invention may vary within the scope of the attached claims.

## Claims

1. A cellular radio system comprising a plurality of mobile radio stations roaming in the system, a plurality of base stations (BTS1-BTS4), each base station comprising at least one radio transmitter (21,22) and radio receiver (33,34), an antenna means (ANT1) with a predetermined radio coverage area (CS1-CS2), and one or more allocated radio channels for establishing a radio connection with the mobile radio stations (MS) within the predetermined radio coverage area (CS1-CS4), at least the base stations with adjacent radio coverage areas having different allocated radio channels, **characterized** in that the system comprises at least one base station (BTS5) including a directional antenna means (ANT1,44) having drive means (43) for mechanically turning the antenna means so as to redirect the radiation pattern of the antenna means automatically or by remote control, depending on the time of the day or variation in regional traffic load.

2. A cellular radio system according to claim 1, **characterized** in that the antenna means is automatically directable in response to the time of the day and / or the day of the week.

3. A cellular radio system according to claim 1, **characterized** in that the antenna means is directable automatically or manually to the nearby areas currently requiring the most traffic capacity.

4. A cellular radio system according to claim 1, **characterized** in that the system comprises means (OMCRN) for re-directing the antenna means (44) on the basis of an overload alarm generated by an element in the system.

5. A cellular radio system according to any one of the preceding claims, **characterized** in that the system is a digital cellular radio system and that each radio channel comprises a plurality of TDMA traffic channel time slots.

6. A cellular radio system according to any one of claims 1 to 4, **characterized** in that the system is an analogue cellular radio system.

## Patentansprüche

1. Zellenfunksystem, das folgendes aufweist:
- eine Vielzahl von mobilen Funkstationen, die sich in dem System umherbewegen,
- eine Vielzahl von Basisstationen (BTS1 bis BTS4), wobei jede Basisstation mindestens einen Funksender (21, 22) und einen Funkempfänger (33, 34) aufweist,
- eine Antenneneinrichtung (ANT1) mit einem vorgegebenen Funkversorgungsgebiet (CS1 bis CS4), und
- einen oder mehrere zugeordnete Funkkanäle zur Ausbildung einer Funkverbindung mit den mobilen Funkstationen (MS) innerhalb des vorgegebenen Funkversorgungsgebietes (CS1 bis CS4), wobei zumindest die Basisstationen mit benachbarten Funkversorgungsgebieten verschiedene zugeordnete Funkkanäle aufweisen,
dadurch gekennzeichnet,
daß das System mindestens eine Basisstation (BTS5) aufweist, die eine Richtantenneneinrichtung (ANT1, 44) mit einer Antriebseinrichtung besitzt, um die Antenneneinrichtung mechanisch zu drehen, um dadurch das Strahlungsmuster der Antenneneinrichtung automatisch oder durch Fernsteuerung neu auszurichten, und zwar in Abhängigkeit von der Tageszeit oder einer Änderung der regionalen Verkehrsbelastung.

2. Zellenfunksystem nach Anspruch 1,
dadurch gekennzeichnet,
daß die Antenneneinrichtung in Abhängigkeit von der Tageszeit und/oder dem Wochentag automatisch ausrichtbar ist.

3. Zellenfunksystem nach Anspruch 1,
dadurch gekennzeichnet,
daß die Antenneneinrichtung automatisch oder von Hand auf die nahegelegenen Bereiche ausrichtbar ist, die momentan die höchste Verkehrskapazität benötigen.

4. Zellenfunksystem nach Anspruch 1,
dadurch gekennzeichnet,
daß das System eine Einrichtung (OMCRN) aufweist, um die Antenneneinrichtung (44) neu auszurichten, und zwar auf der Basis eines Überlastalarmes, der von einem Element in dem System erzeugt wird.

5. Zellenfunksystem nach einem der vorhergehenden Ansprüche,
dadurch gekennzeichnet
daß das System ein digitales Zellenfunksystem ist und daß jeder Funkkanal eine Vielzahl von TDMA-Verkehrskanal-Zeitschlitzen aufweist.

6. Zellenfunksystem nach einem der Ansprüche 1 bis 4,
dadurch gekennzeichnet,
daß das System ein analoges Zellenfunksystem ist.

## Revendications

1. Système radio cellulaire comprenant une pluralité de stations radio mobiles qui se déplacent dans le système, une pluralité de stations de base (BTS1 - BTS4) dont chacune comprend au moins un émetteur radio (21, 22) et un récepteur radio (33, 34), une antenne (ANT1) pour une région de couverture radio prédéterminée (CS1-CS2) et un ou plusieurs canaux radio attribués pour établir une liaison radio avec les stations radio mobiles (MS) à l'intérieur de la région de couverture radio (CS1 - CS4), au moins les stations de base qui ont des régions de couverture radio adjacentes étant munies de canaux radio attribués différents,
caractérisé en ce que le système comprend au moins une station de base (BTS5) munie d'une antenne directionnelle (ANT1, 44) qui comprend des moyens d'actionnement (43) pour faire tourner mécaniquement l'antenne en vue de donner une orientation différente aux diagrammes de rayonnement de l'antenne, soit automatiquement, soit par télécommande, en fonction du moment de la journée ou des variations de charge du trafic régional.

2. Système radio cellulaire selon la revendication 1,
caractérisé en ce que l'antenne peut être orientée automatiquement en fonction du moment de la journée et/ou du jour de la semaine.

3. Système radio cellulaire selon la revendication 1,
caractérisé en ce que l'antenne peut être orientée automatiquement ou manuellement vers les régions les plus proches nécessitant à un moment donné la plus grande capacité de trafic.

4. Système radio cellulaire selon la revendication 1,
caractérisé en ce que le système comprend des moyens (OMCRN) pour réorienter l'antenne (44) sur la base d'une alarme de surcharge engendrée par un élément du système.

5. Système radio cellulaire selon l'une quelconque des revendications précédentes,
caractérisé en ce que le système est un système radio cellulaire numérique et que chaque canal radio comprend une pluralité d'intervalles de temps de canal de trafic (TDMA).

6. Système radio cellulaire selon l'une quelconque des revendications 1 à 4,
caractérisé en ce que le système est un système radio cellulaire analogique.
